# EUROPÄISCHE PATENTSCHRIFT

(11) **EP 2 944 595 B1**
(45) Veröffentlichungstag und Bekanntmachung des Hinweises auf die Patenterteilung: **31.01.2018**
(21) Anmeldenummer: 14001673.4
(22) Anmeldetag: 13.05.2014
(51) Int. Cl.: B65H 75/40, B65H 75/44

(54) **Tragbare Kabel- oder Schlauchtrommel**
Portable cable or hose drum
Enrouleur portatif pour câble ou tuyau

(43) Veröffentlichungstag der Anmeldung: 18.11.2015
(73) Patentinhaber: Hugo Brennenstuhl GmbH & Co. KG, 72074 Tübingen (DE)
(72) Erfinder: Brennenstuhl, Hugo, 72074 Tübingen (DE)
(74) Vertreter: Patentanwälte Magenbauer & Kollegen Partnerschaft mbB

(56) Entgegenhaltungen:
- EP-B1- 1 760 024
- DE-B- 1 185 448
- DE-U1-202006 008 140
- JP-A- S53 112 478
- JP-U- H0 731 758
- JP-U- S5 473 521
- JP-U- S5 810 871
- US-A- 2 049 086
- US-A- 3 021 089

## Beschreibung

Die Erfindung betrifft eine tragbare Kabel- oder Schlauchtrommel, mit einem an einem Standgestell um eine Trommelachse drehbar gelagerten Trommelkörper, der einen Wickelraum zum Aufwickeln eines Kabels oder eines Schlauches zu einem Wickel aufweist, wobei das Standgestell einen Standabschnitt und einen sich im oberen Bereich des Standgestells erstreckenden Handgriffabschnitt aufweist, wobei eine Führungseinrichtung zur Führung des Kabels oder des Schlauchs vorgesehen ist, und wobei die Führungseinrichtung wenigstens ein Führungselement aufweist, das das Kabel oder den Schlauch beim Aufwickelvorgang untergreift und bei einer Bewegung in Achsrichtung der Trommelachse führt, wobei das Führungselement relativ zum Trommelkörper derart beweglich gelagert ist, dass es in Abhängigkeit vom momentanen Wickeldurchmesser des Wickels mehr oder weniger weit in den Wickelraum eintaucht, wobei die Führungseinrichtung dem Handgriffabschnitt zugeordnet ist, wobei die Führungseinrichtung Schwenklagermittel zur schwenkbaren Lagerung des Führungselementes am Handgriffabschnitt aufweist, und wobei die Schwenklagermittel wenigstens ein drehbar im oder auf dem Handgriffabschnitt gelagertes Lagerelement aufweisen.

Die JP S54 73521 U offenbart eine Führungseinrichtung zur Führung eines Kabels, die in Abhängigkeit vom momentanen Wickeldurchmesser des Kabelwickels mehr oder weniger weit in den Wickelraum eintaucht und dabei beim Aufwickeln in Anlage zur momentanen Außenfläche des Wickels liegt. Die Führungseinrichtung umfasst einen biegbaren, beispielsweise aus Kunststoffmaterial bestehenden Materialstreifen, der einerseits an einem am Standgestell gelagerten Zwischenboden befestigt ist und andererseits eine Art Öse besitzt, durch die hindurch das Kabel geführt ist.

Die JP H07 31758 U offenbart ebenfalls eine Führungseinrichtung zur Führung eines Kabels oder Schlauchs, wobei die Führungseinrichtung eine am Handgriff befestigte Hülse aufweist, durch die hindurch der Schlauch bzw. das Kabel geführt ist.

Eine Kabel- oder Schlauchtrommel ist beispielsweise auch aus der EP 1 760 024 B1 bekannt. Die dort offenbarte Führungseinrichtung ist als auf den Handgriffabschnitt aufsteckbares Aufsteckteil ausgebildet, das einen hülsenartigen, auf einen Handgriffabschnitt des Standgestells aufsteckbaren Greifabschnitt und zwei von diesem seitlich abragende Lagerschenkel aufweist. Zwischen den beiden Lagerschenkeln ist ein stabförmiges Führungselement gelagert. Beim Aufwickeln untergreift das Führungselement das Kabel oder den Schlauch und führt dieses bei der Bewegung in Achsrichtung der Trommelachse. Die beiden Schenkel sorgen für eine seitliche Begrenzung der Querbewegung beim Aufwickeln.

Insbesondere bei voll abgewickeltem Kabel oder Schlauch knickt das Kabel oder der Schlauch beim Aufwickeln aufgrund der Führung über das Führungselement ab. Dies kann zu Beschädigungen am Kabel oder Schlauch führen.

Aufgabe der Erfindung ist es, eine tragbare Kabel- oder Schlauchtrommel zu schaffen, mit der sich das Kabel oder der Schlauch schnell und zuverlässig aufwickeln lässt, ohne dass es zu dem vorstehend erwähnten Nachteil kommt.

Diese Aufgabe wird durch eine tragbare Kabel- oder Schlauchtrommel mit den Merkmalen des unabhängigen Anspruchs 1 gelöst. Weiterbildungen der Erfindung sind in den Unteransprüchen dargestellt.

Die erfindungsgemäße Kabel- oder Schlauchtrommel zeichnet sich dadurch aus, dass Lagerelement und Führungselement in Umfangsrichtung des Trommelkörpers parallel beabstandet zueinander angeordnet sind und durch wenigstens ein sich quer zum Handgriffabschnitt erstreckendes stab- oder stegförmiges Verbindungselement miteinander verbunden sind.

Das Führungselement kann also mitbewegt werden, sodass das Kabel oder der Schlauch im Wesentlichen tangential zu einer Wickelwelle des Trommelkörpers oder zu dem momentan aufgewickelten Schlauch- oder Kabelwickel bewegt wird, ohne dass es zu einer starken Abknickung kommt.

Die Führungseinrichtung ist dem Handgriffabschnitt zugeordnet.

Bei einer Weiterbildung der Erfindung ist das Führungselement beim Aufwickeln durch den zunehmenden Wickeldurchmesser des Wickels bewegbar. Die Bewegung des Führungselementes kann also durch den Schlauch- oder Kabelwickel selber erzeugt werden. Zweckmäßigerweise besteht also eine Wechselbeziehung zwischen dem Kabel- oder Schlauchwickel und der Bewegung des Führungselements. Prinzipiell wäre es jedoch auch denkbar, das Führungselement nicht in Abhängigkeit des Kabel- oder Schlauchwickels zu bewegen, sondern durch eine separate Bewegungseinrichtung.

In besonders bevorzugter Weise liegt das Führungselement beim Aufwickeln in Anlage zur momentanen Außenfläche des Wickels.

Wird das Führungselement beim Aufwickeln durch den zunehmenden Wickeldurchmesser des Wickels mitbewegt, kann der tangentiale Einlauf des Kabels oder Schlauchs daher beim Aufwickeln auf die Kabeltrommel mit einfachen und kostengünstigen Mitteln verwirklicht werden.

Die Führungseinrichtung weist Schwenklagermittel zur schwenkbaren Lagerung des Führungselementes am Angriffabschnitt auf. Dadurch kann das Führungselement beim Aufwickeln des Kabels oder des Schlauchs aus dem Wickelraum herausschwenken und daher in einfacher Weise zum Aufwickeln durch den zunehmenden Wickeldurchmesser mit geschwenkt werden. Durch die schwenkbare Lagerung lässt sich das Führungselement wahlweise auf der einen oder auf der anderen Seite des Handgriffabschnitts positionieren, wodurch die Führungseinrichtung für links- oder rechtsgängige Kabel- oder Schlauchtrommeln verwendet werden kann, bei denen das Kabel oder der Schlauch im Uhrzeiger- oder im Gegen-Uhrzeigerrichtung aufgewickelt wird.

Die Schwenklagermittel weisen ein drehbar im oder auf dem Handgriffabschnitt gelagertes Lagerelement auf. Es ist möglich, das Lagerelement im oder auf dem Handgriff mittels Sicherungsmitteln zu sichern, sodass ein unbeabsichtigtes Lösen vom Handgriffabschnitt vermieden wird.

Bei einer Weiterbildung der Erfindung ist das Lagerelement als Aufsteckteil ausgebildet, das auf den Handgriffabschnitt aufgesteckt ist. Das Lagerelement kann beispielsweise ein mittels Kunststoffspritzgießen hergestelltes Kunststoffspritzgießteil sein, das kostengünstig herstellbar ist.

Zweckmäßigerweise ist der Handgriffabschnitt als Hohlprofil ausgebildet. Der Handgriffabschnitt ist zweckmäßigerweise eine einstückige Verlängerung des Standgestells. Es ist beispielsweise möglich, das Standgestell aus einem Rohr zu fertigen, wobei durch entsprechende Biegungen des Rohrs der Standabschnitt und der Handgriffabschnitt gebildet werden.

Als Alternative zum Aufsteckteil ist es möglich, dass das Lagerelement als insbesondere stabförmig ausgebildetes Einsteckteil ausgebildet ist, das in den als Hohlprofil ausgebildeten Handgriffabschnitt eingesteckt ist.

Lagerelement und Führungselement sind in Umfangsrichtung des Trommelkörpers parallel beabstandet zueinander und durch wenigstens ein sich quer zum Handgriffabschnitt erstreckendes, insbesondere stab- oder stegförmiges Verbindungselement miteinander verbunden.

In besonders bevorzugter Weise ist an beiden Enden des Führungselements jeweils ein Verbindungselement angeordnet, wobei die beiden Verbindungselemente seitliche Begrenzungen für die in Achsrichtung gerichtete Bewegung des Kabels oder Schlauchs beim Aufwickeln bilden.

Die Führungselemente und die beiden Verbindungselemente können einen U-förmig ausgebildeten Führungsbügel oder Schwenkbügel bilden. Es ist möglich, dass das Führungselement und die beiden Verbindungselemente einstückig miteinander verbunden sind. Es ist beispielsweise möglich, den Führungs- oder Schwenkbügel mittels Kunststoffspritzgießen als Kunststoffspritzgießteil herzustellen.

Bei einer Weiterbildung der Erfindung fungieren die beiden Verbindungselemente als Lagerelement und weisen an ihren dem Führungselement abgewandten Enden miteinander fluchtende Durchgangsöffnungen zum Aufstecken auf den Handgriffabschnitt auf.

Bei einer Weiterbildung der Erfindung ist dem Handgriffabschnitt eine Greiffläche für die Hand des Benutzers zugeordnet, wobei vorzugsweise die Greiffläche gestellfest am Handgriffelement oder an einem vom Handgriffelement separaten Greifteil angeordnet ist. Es ist beispielsweise möglich, dass das Greifteil von einer auf den Handgriffabschnitt aufgesteckten Aufsteckhülse gebildet ist. Es ist möglich, dass das Greifteil Lagerflächen für die schwenkbare Lagerung des aufsteckbaren Lagerelements bereitstellt.

In besonders bevorzugter Weise weist die Führungseinrichtung einen Stecker-Parkplatz für einen Kabelstecker des Kabels auf. Der Stecker-Parkplatz kann beispielsweise am Führungselement ausgebildete Bohrungen zur Aufnahme der Kontakte des Kabelsteckers aufweisen.

Ferner ist es möglich, dass eine Kabel- oder Schlauchfixierung vorgesehen ist, die beispielswies einen an einer Trommelscheibe des Trommelkörpers angeordneten Aufnahmeclip besitzt, in den das Kabel oder der Schlauch einclipsbar ist. Ferner ist es möglich, dass der Aufnahmeclip Bestandteil der Führungseinrichtung ist, beispielsweise an einem der beiden Verbindungselemente angeordnet ist.

Zweckmäßigerweise besitzt der Trommelkörper der Schlauch- oder Kabeltrommel eine drehbar durch die Trommelachse gelagerte Wickelwelle, an deren Mantelfläche der Schlauch beziehungsweise das Kabel beim Aufwickeln angelagert wird. Zum Trommelkörper gehören ferner zweckmäßigerweise noch an die Wickelwelle angesetzte Trommelscheiben, die gegenüber der Wickelwelle einen größeren Scheibendurchmesser aufweisen. Die beiden Trommelscheiben und die Wickelwelle können einen kreisringförmigen Wickelraum begrenzen. Zweckmäßigerweise erstreckt sich das Führungselement im Wesentlichen über die gesamte Breite des Wickelraums.

Es ist möglich, dass das Führungselement bei vollständig abgewickeltem Schlauch oder Kabel zunächst an einer Anlagefläche der Wickelwelle, beispielsweise an deren Mantelfläche, anliegt und von dort beim Aufwickeln durch den zunehmenden Wickeldurchmesser des Wickels mitgenommen und aus dem Wickelraum herausbewegt, insbesondere herausgeschwenkt wird, sodass es bei vollständig aufgewickeltem Kabel oder Schlauch beispielsweise aus einer Position zwischen den beiden Trommelscheiben herausgelangt.

Bevorzugte Ausführungsbeispiele der Erfindung sind in der Zeichnung dargestellt und werden im Folgenden näher erläutert. In der Zeichnung zeigen:
- Figur 1: eine perspektivische Darstellung mit Ansicht auf die Vorderseite eines ersten Ausführungsbeispiels der erfindungsgemäßen Kabel- oder Schlauchtrommel bei vollständig aufgewickeltem Kabel,
- Figur 2: die Kabel- oder Schlauchtrommel von Figur 1 in einer perspektivischen Ansicht auf die Rückseite, ebenfalls bei vollständig aufgewickeltem Kabel,
- Figur 3: eine perspektivische Darstellung der Kabel- oder Schlauchtrommel von Figur 1 bei teilweise abgewickeltem Kabel,
- Figur 4: eine perspektivische Darstellung der Kabel- oder Schlauchtrommel von Figur 2, ebenfalls bei teilweise abgewickeltem Kabel,
- Figur 5: eine perspektivische Darstellung auf eine Ausführungsvariante der Kabeltrommel von Figur 1 für das Aufwickeln des Kabels in Gegen-Uhrzeigerrichtung,
- Figur 6: eine perspektivische Ansicht der Führungseinrichtung der Kabel- oder Schlauchtrommel von Figur 1,
- Figur 7: eine perspektivische Darstellung der Führungseinrichtung von Figur 6 mit einer Ansicht aus einer anderen Richtung,
- Figur 8: eine Explosionsdarstellung der Komponenten der Führungseinrichtung von Figur 6,
- Figur 9: eine perspektivische Darstellung eines zweiten Ausführungsbeispiels der erfindungsgemäßen Kabel- oder Schlauchtrommel mit Ansicht auf die Vorderseite,
- Figur 10: eine perspektivische Ansicht der Kabel- oder Schlauchtrommel von Figur 9 von schräg oben,
- Figur 11: eine Vorderansicht der Kabeltrommel von Figur 10,
- Figur 12: eine teilweise geschnittene Ansicht von schräg oben auf die Kabeltrommel von Figur 9,
- Figur 13: eine perspektivische Darstellung auf eine Führungseinrichtung der Kabeltrommel von Figur 9 und
- Figur 14: eine perspektivische Darstellung der Führungseinrichtung von Figur 13 in anderer Ansicht.

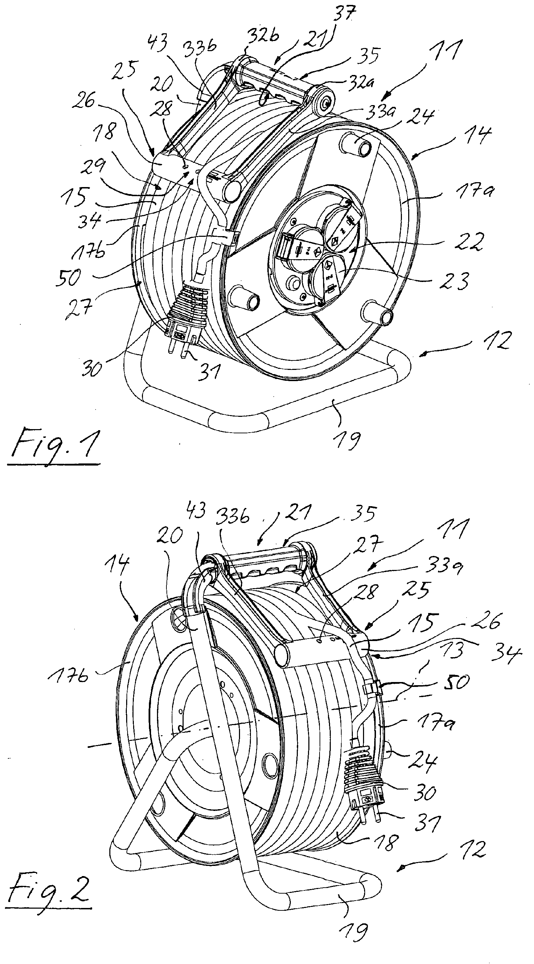

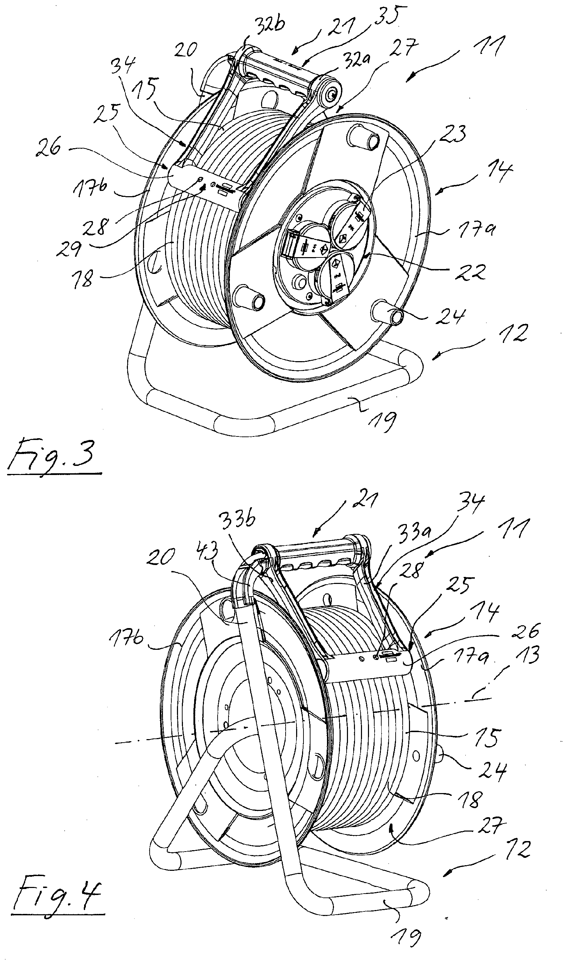

Die Figuren 1 bis 8 zeigen ein erstes Ausführungsbeispiel der erfindungsgemäßen tragbaren Kabel- oder Schlauchtrommel 11. Der Einfachheit halber wird im Folgenden die Kabel- oder Schlauchtrommel lediglich Kabeltrommel 11 genannt.

Die Kabeltrommel 11 besitzt einen an einem Standgestell 12 um eine Trommelachse 13 drehbar gelagerten Trommelkörper 14, der seinerseits aus einer das Kabel 15 aufnehmenden Wickelwelle 16 und einem die Wickelwelle 16 zu beiden Enden abschließenden Trommelscheiben 17a, 17b mit gegenüber der Wickelwelle 16 deutlich größerem Durchmesser besteht. Der Trommelkörper 14 kann aus Gummi-, Kunststoff- oder Metall-, insbesondere Stahlmaterial bestehen.

Die einander gegenüberliegenden Innenseiten der beiden Trommelscheiben 17a, 17b begrenzen einen Wickelraum 27 zum Aufwickeln des Kabels 15. Dabei wird das Kabel 15 beim Aufwickeln an die Mantelfläche der Wickelwelle 16 in Anlage gebracht, bis diese vollständig mit dem Kabel 15 bedeckt ist, wobei dann anschließend eine zweite Kabellage über die auf der Wickelwelle 16 befindliche erste Kabellage aufgewickelt wird. Insgesamt entsteht dadurch beim Aufwickeln ein Kabelwickel 18, dessen Wickeldurchmesser beim Aufwickeln zunimmt und entsprechend beim Abwickeln abnimmt.

Das Standgestell 12 besteht aus einem Standabschnitt 19 oder Fuß, über den die Kabeltrommel 11 standsicher auf dem Untergrund abgestellt werden kann. An den Standabschnitt 19 schließt sich, insbesondere einstückig mit diesem verbunden, ein Vertikalabschnitt 20 an, der oberhalb der Trommelscheiben 17a, 17b in einen sich im Wesentlichen parallel zur Trommelachse 13 erstreckenden Handgriffabschnitt 21 insbesondere einstückig übergeht.

Wie insbesondere in den Figuren 1, 3 und 5 dargestellt, befindet sich an der vorderen der beiden Trommelscheiben 17a, 17b ein Steckdosenbereich 22 mit einer bestimmten Anzahl von Steckdosen 23, beispielsweise drei oder vier an der Zahl. An der hinteren Trommelscheibe 17b verläuft der zuvor erwähnte Vertikalabschnitt 20 des Standgestells 12. Ferner befindet sich an der vorderen Trommelscheibe 17a noch wenigstens ein Drehgriff 24, über den der Trommelkörper 14 zum Zwecke des Auf- beziehungsweise Abwickelns des Kabels 15 in Drehbewegung versetzbar ist. Es sind hier in beispielhafter Weise drei insbesondere mit gleichem Winkelabstand zueinander angeordnete Drehgriffe 24 vorgesehen. Die Drehgriffe 24 sind vorzugsweise als Zapfen ausgebildet, die einstückig mit der vorderen Trommelscheibe 17a ausgebildet sind und von dieser im Wesentlichen senkrecht abstehen.

Es ist ferner eine Kabelfixierung vorgesehen, die im gezeigten Beispielsfall einen an einer der Trommelscheiben angeordneten, insbesondere dort lösbar befestigten Aufnahmeclip 50 besitzt, in den das Kabel 15 einclipsbar ist.

Dem Handgriffabschnitt 21 ist eine Führungseinrichtung 25 zur Führung des Kabels 15 zugeordnet, wobei die Führungseinrichtung 25 wenigstens ein Führungselement 26 aufweist, das das Kabel 15 beim Aufwickelvorgang untergreift und bei einer Bewegung in Achsrichtung der Trommelachse 13 führt.

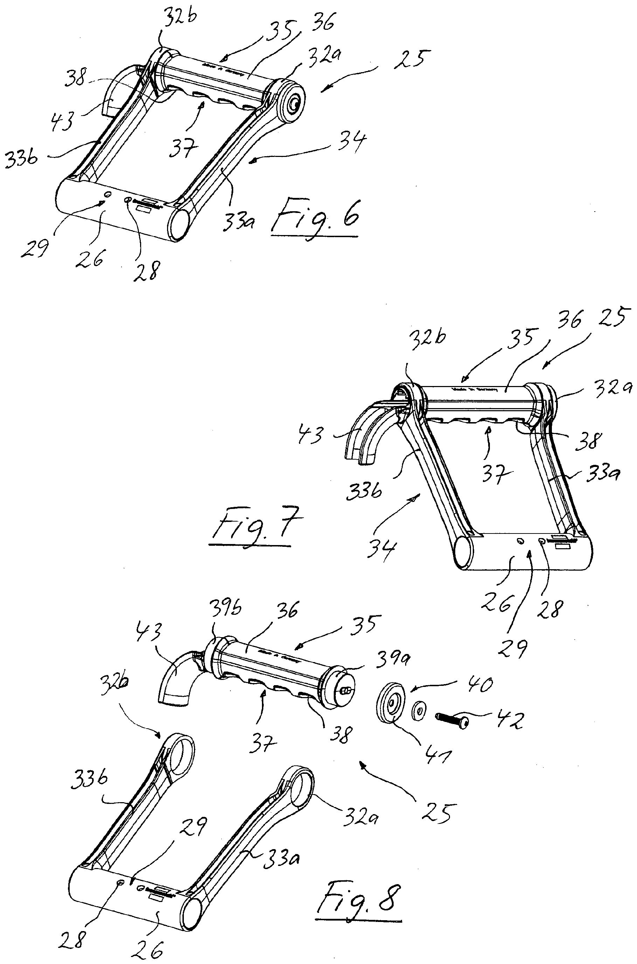

Die Figuren 6 bis 8 zeigen die Führungseinrichtung 25, die in Zusammenhang mit dem ersten Ausführungsbeispiel der erfindungsgemäßen Kabeltrommel 11 eingesetzt wird. Die Führungseinrichtung 25 umfasst Schwenklagermittel, mit denen das Führungselement 26 am Handgriffabschnitt 21 schwenkbar gelagert ist.

Wie insbesondere die Zusammenschau der Figuren 1 bis 4 zeigt, ist das Führungselement 26 stabförmig ausgebildet und erstreckt sich im Wesentlichen über die Breite des seitlich durch die beiden Trommelscheiben 17a, 17b begrenzten Wickelraums 27. Dadurch ist es möglich, dass das Führungselement 26 in den Zwischenraum zwischen den beiden Trommelscheiben 17a, 17b eintauchen kann oder, wie beim Aufwickeln der Fall, aus einem eingetauchten Zustand aus dem Zwischenraum herausgelangen kann. Durch die längliche Erstreckung des Führungselements 26 über im Wesentlichen die gesamte Breite des Wickelraums 27 ist es möglich, das Kabel 15 gleichmäßig über die Breite der Wickelwelle 16 aufzuwickeln, da die Mantelfläche des Führungselements 26 als Quergleitfläche für das Kabel 15 dient, auf der das Kabel 15 beim Aufwickeln entlang gleiten kann.

Das Führungselement 26 ist in dem in den Figuren 6 bis 8 gezeigten Beispielsfall als Führungshülse ausgebildet. In der Mantelfläche der Führungshülse befinden sich zwei in radialer Richtung verlaufende Löcher 28, die Bestandteil eines Stecker-Parkplatzes 29 für den Kabelstecker 30 des Kabels 15 sind, wobei die Löcher 28 zur Aufnahme der Kontakte 31 des Kabelsteckers 30 dienen. Durch Einstecken der Kontakte 31 in die Löcher 28 lässt sich der Kabelstecker 30 komfortabel positionieren, sodass er immer sofort griffbereit ist. Dadurch, dass die Löcher 28 in radialer Richtung durch die Mantelfläche der Führungshülse verlaufen, steht der Kabelstecker 30 im eingesteckten Zustand senkrecht zum Kabel 15, wodurch er einfach gegriffen werden kann. Außerdem verhindern die Löcher 28, dass der Kabelstecker 30 nach dem Einstecken durch weiteres Aufwickeln des Kabels 15 auf die Wickelwelle 16 mitaufgewickelt und durch den Aufwickelvorgang umher - geschleudert wird, was zu Beschädigungen am Kabelstecker führen kann.

Zur schwenkbaren Lagerung des Führungselements 26 dienen die zuvor erwähnten Schwenklagermittel, die ein auf dem Handgriffabschnitt 21 gelagertes Lagerelement umfassen. Im in den Figuren 6 bis 8 gezeigten Beispielsfall sind an den beiden Enden des als Führungshülse ausgebildeten Führungselements 26 jeweils steg- oder stangenförmige Verbindungselemente 33a, 33b angeordnet, an deren dem Führungselement 26 abgewandten Enden die Lagerelemente 32a, 32b in Form von Lagerringen oder Lageraugen angeordnet sind. Die beiden Verbindungselemente 33a, 33b sind nach Art einer Pleuelstange ausgebildet und sind einenends am Führungselement 26 befestigt und besitzen andernends die Lageraugen.

Zweckmäßigerweise bilden die beiden Verbindungselemente 33a, 33b und die Führungshülse ein einstückiges Bauteil, das beispielsweise mittels Kunststoffspritzgießen als Kunststoffspritzgießteil hergestellt werden kann. Insgesamt bilden die beiden Verbindungselemente 33a, 33b und die Führungshülse also einen U-förmigen Schwenkbügel 34, der auf dem Handgriffabschnitt 21 schwenkbar gelagert ist.

Die Kabeltrommel 11 gemäß erstem Ausführungsbeispiel umfasst ferner noch ein Greifteil 35, das von einer auf den Handgriffabschnitt 21 aufgesteckten Aufsteckhülse gebildet ist. Das Greifteil 35 ist zweckmäßigerweise ebenfalls als Kunststoffspritzgießteil ausgebildet. Es besitzt einen Basisabschnitt 36, an dessen zylindrischer Mantelfläche ein Griffbereich 37 mit Fingermulden 38 für die Finger des Benutzers ausgebildet ist.

Wie insbesondere in Figur 8 zu erkennen, befinden sich an beiden Enden des Basisteils 36 jeweils sich von den Stirnseiten der Basisteil-Enden in axialer Richtung erstreckende zylindrische Lagerabschnitte 39a, 39b (Figur 7), auf die jeweils ein Lagerauge des Schwenkbügels 34 aufgesteckt ist. Zur Fixierung des Lagerauges, das dem freien Ende des Handgriffabschnitts 21 zugeordnet ist, dienen Fixiermittel 40, die eine Fixierscheibe 41 umfassen, deren Durchmesser größer als der Durchmesser des Lagerauges ist und somit ein axiales Verrutschen des Lagerauges auf den zugeordneten Lagerabschnitt verhindern. Die Fixierscheibe 41 ist mittels einer Fixierschraube 42 am Lagerabschnitt 39a des Greifteils 35 gesichert.

Das Greifteil 35 umfasst ferner ein halbschalenartiges Krümmerteil 43, dessen Krümmung an die Biegung zwischen dem Vertikalabschnitt 20 und dem Handgriffabschnitt 21 des Standgestells 12 angepasst ist, wobei das Krümmerteil 43 insbesondere einstückig mit dem Greifteil 35 verbunden ist.

Der Schwenkbügel 34 und das Greifteil 35 bilden eine vormontierte Baugruppe, die als Einheit auf den Handgriffabschnitt 21 des Standgestells 12 aufsteckbar ist.

Das hülsenartige Führungselement 26 liegt bei vollständig abgewickeltem Kabel 15 an einer Anlagefläche der Wickelwelle 16 an. Beim Aufwickeln wird das Kabel 15 vom Führungselement 26 untergriffen und läuft über die Mantelfläche des Führungselementes 26, von wo es dann auf die Wickelwelle 16 aufgewickelt wird. Dadurch, dass das Kabel 15 auf der Quergleitfläche des Führungselementes 26 entlang gleiten kann, wird ein gleichmä-ßiges Aufwickeln des Kabels 15 in der Art unterstützt, dass zunächst eine erste Wickellage mit nebeneinanderliegenden Kabelabschnitten auf die Wickelwelle aufgewickelt wird. Auf die erste Wickellage erfolgt eine über der ersten Wickellage angeordnete zweite Wickellage. Dabei wird das Führungselement 26 beim Aufwickeln durch den zunehmenden Wickeldurchmesser des Wickels 18 bewegt, das heißt, der Schwenkbügel 34 wird durch den zunehmenden Wickeldurchmesser des Wickels 18 letztlich aus dem Zwischenraum zwischen den beiden Trommelscheiben 17a, 17b herausgeschwenkt. Dadurch, dass das Führungselement 26 stets auf der obersten Wickellage aufliegt, wird ein im Wesentlichen tangentiales Einlaufen des Kabels 15 beim Aufwickeln erreicht, wodurch ein starkes Abknicken des Kabels 15, wie es beispielsweise beim Stand der Technik der Fall sein könnte, verhindert wird.

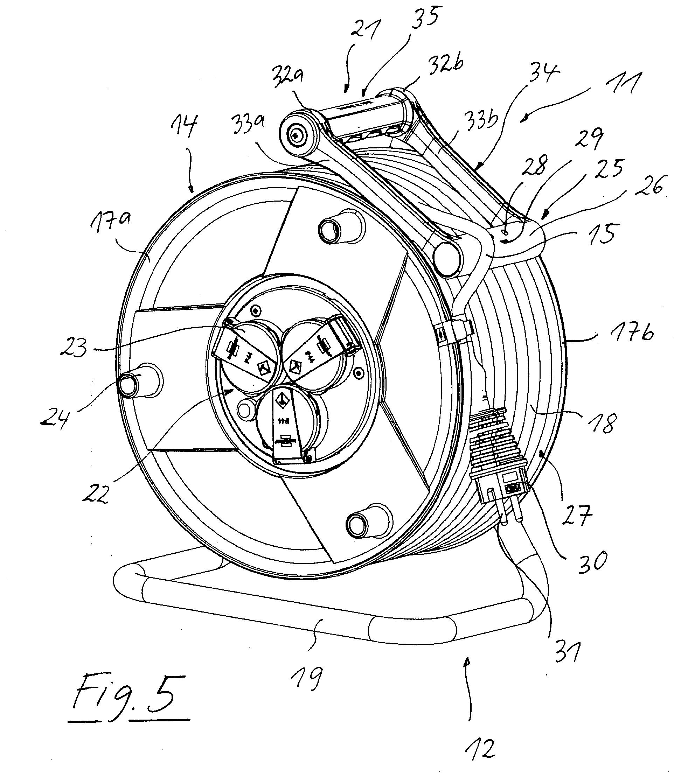

Durch die Schwenkbarkeit des Schwenkbügels 34 lässt sich die Kabeltrommel 11 auch für links- oder rechtsgängige Kabeltrommeln 11 nutzen, die entweder im Uhrzeiger- oder im Gegen-Uhrzeigersinn aufgewickelt werden. Dabei kann, wie in Figur 5 dargestellt, der Schwenkbügel einfach auf die andere Seite des Handgriffabschnitts 21 hinüber geschwenkt werden.

Ferner bietet der Schwenkbügel 34 auch weitere Funktionen, die über die Führung des Kabels 15 beim Aufwickeln hinausgehen. So ist es beispielsweise möglich, den Schwenkbügel 34 als verlängerten Griff zu verwenden, indem der Schwenkbügel nach oben geschwenkt und anstelle des Greifteils 35 das Führungselement 26 gegriffen wird. Ferner ist es auch möglich, die Kabeltrommel 11 am Schwenkbügel aufzuhängen. Ferner bietet das Hohlprofil des Führungsemelentes 26 auch die Möglichkeit der Fixierung der Kabeltrommel 11 an Peripheriebauteilen, indem beispielsweise ein Seil oder dergleichen hindurchgefädelt wird, das dann am Peripheriebauteil fixiert werden kann.

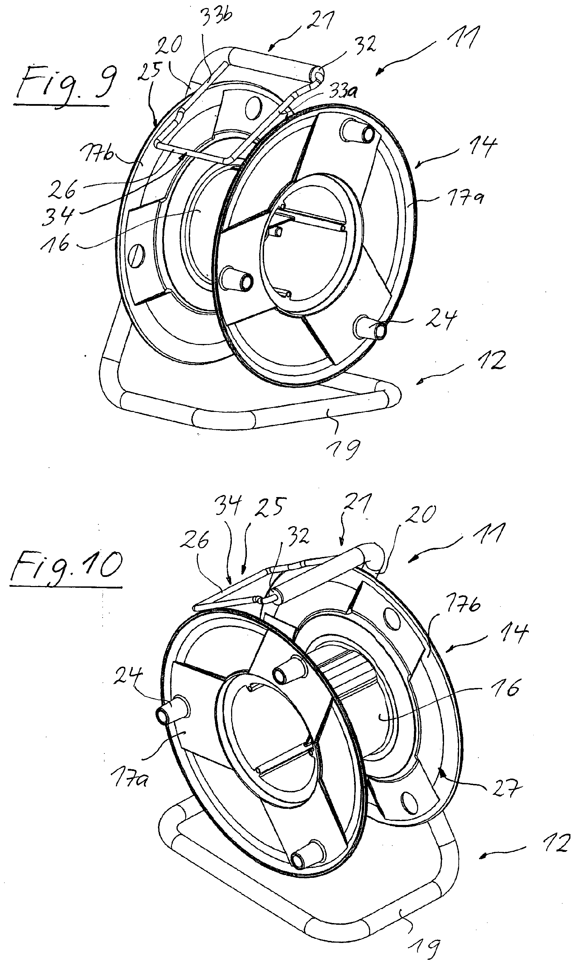

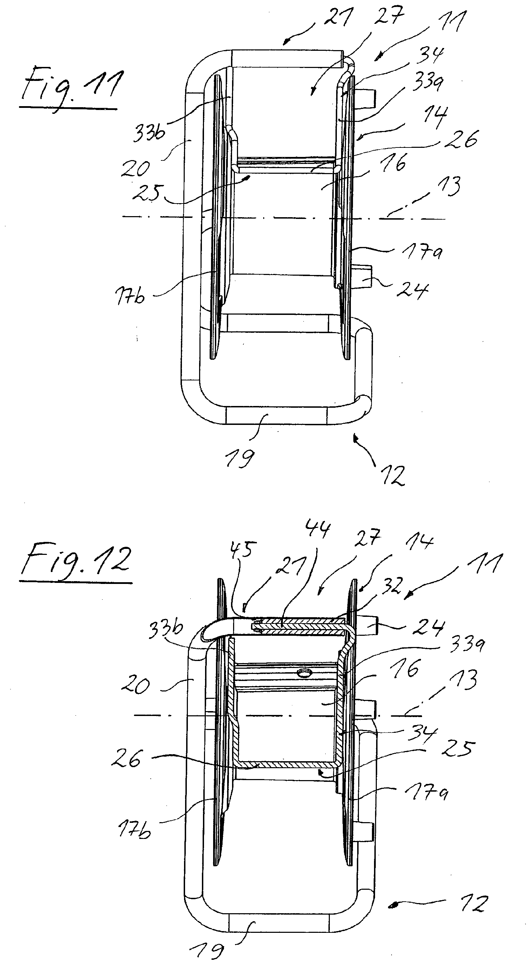

Die Figuren 9 bis 14 zeigen ein zweites Ausführungsbeispiel der erfindungsgemäßen Kabeltrommel 11. Dieses Ausführungsbeispiel unterscheidet sich von dem zuvor beschriebenen ersten Ausführungsbeispiel durch die andersartige Ausgestaltung der Führungseinrichtung 25. Auch diese Führungseinrichtung 25 besitzt ein Führungselement 26, das jedoch im Gegensatz zum zuvor beschriebenen Ausführungsbeispiel nicht als Führungshülse ausgebildet ist, sondern als Führungsabschnitt eines U-förmig ausgebildeten Stabs oder Riegels, der insbesondere als Drahtriegel ausgebildet ist. Wie insbesondere in den Figuren 9 bis 12 zu erkennen, erstreckt sich der Führungsabschnitt im Wesentlichen über die gesamte Breite des Wickelraums. Die beiden Verbindungselemente 33a, 33b sind einstückig an den Führungsabschnitt angesetzte Schenkel, wobei einer der Schenkel einen im Wesentlichen parallel zum Führungsabschnitt ausgebildeten Lagerabschnitt 44 (Figur 12), der durch eine weitere Biegung dieses Schenkels gebildet ist, aufweist. Auf dem Lagerabschnitt 44 dieses Schenkels ist ein stabförmiges Lagerelement 33 aufgesteckt, das als Einsteckteil zum Einstecken in das Hohlprofil des Handgriffabschnitts 21 dient. Das stabförmige Lagerelement ist im Hohlprofil des Handgriffabschnitts 21 drehbar gelagert oder es wäre auch denkbar, dass Lagerelement 33 und Lagerabschnitt 44 verschwenkbar zueinander sind. Zur Fixierung des stabförmigen Lagerelements auf dem Lagerabschnitt 44 des Schenkels des Schwenkbügels 34 dienen Fixiermittel 45, die verhindern, dass das stabförmige Lagerelement nicht vom freien Ende des Lagerabschnitts 44 herunter gelangen kann.

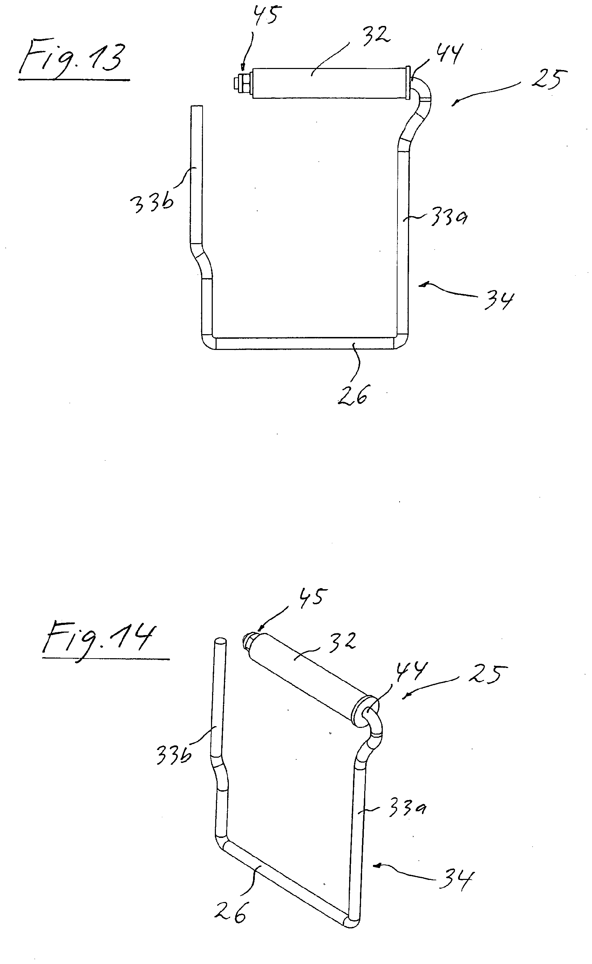

Insgesamt ist, wie in den Figuren 13 und 14 gezeigt, auch hier eine vormontierte Baugruppe bereitgestellt, die als Einheit an den Handgriffabschnitt 21 montiert werden kann, indem das stabförmige Lagerelement in den Handgriffabschnitt 21 eingesteckt wird.

Die Funktion des Schwenkbügels mit dem Führungselement entspricht der Funktion, wie sie bereits im Zusammenhang mit dem ersten Ausführungsbeispiel beschrieben wurde.

## Patentansprüche

1. Tragbare Kabel- oder Schlauchtrommel, mit einem an einem Standgestell (12) um eine Trommelachse (13) drehbar gelagerten Trommelkörper (14), der einen Wickelraum (27) zum Aufwickeln eines Kabels (15) oder eines Schlauchs zu einem Wickel (18) aufweist, wobei das Standgestell (12) einen Standabschnitt (19) und einen sich im oberen Bereich des Standgestells (12) erstreckenden Handgriffabschnitt (21) aufweist, wobei eine Führungseinrichtung (25) zur Führung des Kabels (15) oder des Schlauchs zugeordnet ist, und wobei die Führungseinrichtung (25) wenigstens ein Führungselement (26) aufweist, das das Kabel (15) oder den Schlauch beim Aufwickelvorgang untergreift und bei einer Bewegung in Achsrichtung der Trommelachse (13) führt, wobei das Führungselement (26) relativ zum Trommelkörper (14) derart beweglich gelagert ist, dass es in Abhängigkeit vom momentanen Wickeldurchmesser des Wickels (18) mehr oder weniger weit in den Wickelraum (27) eintaucht, wobei die Führungseinrichtung (25) dem Handgriffabschnitt (21) zugeordnet ist, wobei die Führungseinrichtung (25) Schwenklagermittel zur schwenkbaren Lagerung des Führungselementes (26) am Handgriffabschnitt (21) aufweist, und wobei die Schwenklagermittel wenigstens ein drehbar im oder auf dem Handgriffabschnitt (21) gelagertes Lagerelement (32a, 32b; 32) aufweisen, **dadurch gekennzeichnet, dass** Lagerelement (32a, 32b; 32) und Führungselement (26) in Umfangsrichtung des Trommelkörpers (14) parallel beabstandet zueinander angeordnet sind und durch wenigstens ein sich quer zum Handgriffabschnitt (21) erstreckendes stab- oder stegförmiges Verbindungselement (33a, 33b) miteinander verbunden sind.

2. Kabel- oder Schlauchtrommel nach Anspruch 1, **dadurch gekennzeichnet, dass** das Führungselement (26) beim Aufwickeln durch den zunehmenden Wickeldurchmesser des Wickels (18) bewegbar ist.

3. Kabel- oder Schlauchtrommel nach Anspruch 2, **dadurch gekennzeichnet, dass** das Führungselement (26) beim Aufwickeln in Anlage zur momentanen Außenfläche des Wickels (18) liegt.

4. Kabel- oder Schlauchtrommel nach einem der vorherigen Ansprüche, **dadurch gekennzeichnet, dass** das wenigstens eine Lagerelement (32a, 32b) als Aufsteckteil ausgebildet ist, das auf den Handgriffabschnitt (21) aufgesteckt ist.

5. Kabel- oder Schlauchtrommel nach einem der vorhergehenden Ansprüche, **dadurch gekennzeichnet, dass** der Handgriffabschnitt (21) als Hohlprofil ausgebildet ist.

6. Kabel- oder Schlauchtrommel nach Anspruch 5, **dadurch gekennzeichnet, dass** das Lagerelement (32) als insbesondere stabförmig ausgebildetes Einsteckteil ausgebildet ist, das in den als Hohlprofil ausgebildeten Handgriffabschnitt (21) eingesteckt ist.

7. Kabel- oder Schlauchtrommel nach einem der vorhergehenden Ansprüche, **dadurch gekennzeichnet, dass** an beiden Enden des Führungselements (26) jeweils ein Verbindungselement (33a, 33b) angeordnet ist, wobei die beiden Verbindungselemente (33a, 33b) seitliche Begrenzungen für die in Achsrichtung gerichtete Bewegung des Kabels (15) beim Aufwickeln bilden.

8. Kabel- oder Schlauchtrommel nach Anspruch 7, **dadurch gekennzeichnet, dass** das Führungselement (26) und die beiden Verbindungselemente (33a, 33b) einen insbesondere einstückig U-förmig ausgebildeten Schwenkbügel (34) bilden.

9. Kabel- oder Schlauchtrommel nach einem der vorhergehenden Ansprüche 7 und 8, **dadurch gekennzeichnet, dass** die beiden Verbindungselemente (33a, 33b) als Lagerelemente fungieren und an ihren dem Führungselement (26) abgewandten Enden miteinander fluchtende Durchgangsöffnungen zum Aufstecken auf den Handgriffabschnitt (21) aufweisen.

10. Kabel- oder Schlauchtrommel nach einem der vorhergehenden Ansprüche, **dadurch gekennzeichnet, dass** dem Handgriffabschnitt (21) eine Greiffläche für die Hand des Benutzers zugeordnet ist, wobei vorzugsweise die Greiffläche gestellfest am Handgriffabschnitt (21) oder an einem vom Handgriffabschnitt separaten Greifteil (35) angeordnet ist.

11. Kabel- oder Schlauchtrommel nach Anspruch 10, **dadurch gekennzeichnet, dass** das Greifteil (35) von einer auf den Handgriffabschnitt (21) aufgesteckten Aufsteckhülse gebildet ist.

12. Kabel- oder Schlauchtrommel nach einem der vorhergehenden Ansprüche, **dadurch gekennzeichnet, dass** die Führungseinrichtung (25) einen Stecker-Parkplatz (29) für einen Kabelstecker (30) des Kabels (15) aufweist, wobei vorzugsweise am Führungselement (26) Löcher (28) zur Aufnahme der Kontakte (31) des Kabelsteckers (30) ausgebildet sind.

## Claims

1. Portable cable or hose reel, comprising a reel body (14) mounted on a stand (12), rotatable around a reel axle (13) and having a winding space (27) for winding a cable (15) or a hose to form a reel (18), wherein the stand (12) has a stand section (19) and a handle section (21) extending in the upper region of the stand (12), wherein a guide device (25) is provided for guiding the cable (15) or the hose, and wherein the guide device (25) comprises at least one guide element (26), which engages the cable (15) or the hose from below in the winding process and guides it during a movement of the reel axle (13) in the axial direction, wherein the guide element (26) is movably mounted relative to the reel body (14) in such a way that it dips to a greater or lesser degree into the winding space (27) as a function of the current reel diameter of the reel (18), wherein the guide device (25) is assigned to the handle section (21), wherein the guide device (25) comprises pivot bearing means for the pivotable mounting of the guide element (26) on the handle section (21), and wherein the pivot bearing means comprise at least one bearing element (32a, 32b; 32) rotatably mounted in or on the handle section (21), **characterised in that** the bearing element (32a, 32b; 32) and the guide element (26) are arranged parallel to and at a distance from each other in the circumferential direction of the reel body (14) and joined to each other by at least one rod- or web-shaped connecting element (33a, 33b), which extends transversely to the handle section (21).

2. Cable or hose reel according to claim 1, **characterised in that** the guide element (26) is movable through the increasing reel diameter of the reel (18) in the winding process.

3. Cable or hose reel according to claim 2, **characterised in that** the guide element (26) is in contact with the current outer surface of the reel (18) in the winding process.

4. Cable or hose reel according to any of the preceding claims, **characterised in that** the at least one bearing element (32a, 32b) is designed as a push-on part which is pushed onto the handle section (21).

5. Cable or hose reel according to any of the preceding claims, **characterised in that** the handle section (21) is designed as a hollow section.

6. Cable or hose reel according to claim 5, **characterised in that** the bearing element (32) is designed as an in particular rod-shaped insert part which is inserted into the handle section (21) designed as a hollow section.

7. Cable or hose reel according to any of the preceding claims, **characterised in that** a connecting element (33a, 33b) each is located at both ends of the guide element (26), the two connecting elements (33a, 33b) forming lateral limits for the axially oriented movement of the cable (15) in the winding process.

8. Cable or hose reel according to claim 7, **characterised in that** the guide element (26) and the two connecting elements (33a, 33b) form an in particular one-piece U-shaped swivel bow (34).

9. Cable or hose reel according to any of the preceding claims, **characterised in that** the two connecting elements (33a, 33b) act as bearing elements and have at the ends remote from the guide element (26) mutually aligned through-openings for pushing onto the handle section (21).

10. Cable or hose reel according to any of the preceding claims, **characterised in that** the handle section (21) is assigned a gripping surface for the hand of the user, the gripping surface being preferably fixed to the stand and located at the handle section (21) or at a gripping part (35) separate from the handle section.

11. Cable or hose reel according to claim 10, **characterised in that** the gripping part (35) is represented by a push-on sleeve pushed onto the handle section (21).

12. Cable or hose reel according to any of the preceding claims, **characterised in that** the guide device (25) has a plug parking space (29) for a cable plug (30) of the cable (15), wherein holes (28) for accommodating the contacts (31) of the cable plug (30) are preferably formed in the guide element (26).

## Revendications

1. Enrouleur portatif pour câble ou tuyau avec un corps d'enrouleur (14) logé de façon à pouvoir tourner sur un support fixe (12) autour d'un axe d'enrouleur (13) qui présente un espace d'enroulement (27) pour enrouler un câble (15) ou un tuyau en un enroulement (18), dans lequel le support fixe (12) présente une section fixe (19) et une section de poignée (21) s'étendant dans la zone supérieure du support fixe (12), dans lequel un dispositif de guidage (25) est associé pour le guidage du câble (15) ou du tuyau, et dans lequel le dispositif de guidage (25) présente au moins un élément de guidage (26) qui agit sous le câble (15) ou le tuyau lors du processus d'enroulement et mène lors d'un mouvement dans le sens axial de l'axe d'enrouleur (13), dans lequel l'élément de guidage (26) est logé de façon mobile par rapport au corps d'enrouleur (14) de telle manière qu'il s'enfonce en fonction du diamètre d'enroulement momentané de l'enroulement (18) plus ou moins loin dans l'espace d'enroulement (27), dans lequel le dispositif de guidage (25) est associé à la section de poignée (21), dans lequel le dispositif de guidage (25) présente des moyens de palier pivotant pour le logement pivotant de l'élément de guidage (26) sur la section de poignée (21), et dans lequel les moyens de palier pivotant présentent au moins un élément de palier (32a, 32b ; 32) logé de façon à pouvoir tourner dans ou sur la section de poignée (21), **caractérisé en ce que** l'élément de palier (32a, 32b ; 32) et l'élément de guidage (26) sont disposés dans le sens périphérique du corps d'enrouleur (14) parallèlement à distance l'un de l'autre et sont reliés l'un à l'autre par au moins un élément de liaison (33a, 33b) en forme de barrette ou barre s'étendant transversalement à la section de poignée (21).

2. Enrouleur pour câble ou tuyau selon la revendication 1, **caractérisé en ce que** l'élément de guidage (26) est mobile lors de l'enroulement par le diamètre d'enroulement croissant de l'enroulement (18).

3. Enrouleur pour câble ou tuyau selon la revendication 2, **caractérisé en ce que** l'élément de guidage (26) se trouve lors de l'enroulement en appui contre la surface extérieure momentanée de l'enroulement (18).

4. Enrouleur pour câble ou tuyau selon l'une quelconque des revendications précédentes, **caractérisé en ce que** l'au moins un élément de palier (32a, 32b) est réalisé en tant que partie d'enfichage qui est enfichée sur la section de poignée (21).

5. Enrouleur pour câble ou tuyau selon l'une quelconque des revendications précédentes, **caractérisé en ce que** la section de poignée (21) est réalisée en tant que profil creux.

6. Enrouleur pour câble ou tuyau selon la revendication 5, **caractérisé en ce que** l'élément de palier (32) est réalisé en tant que partie d'enfichage réalisée en particulier en forme de barre qui est enfichée dans la section de poignée (21) réalisée en tant que profil creux.

7. Enrouleur pour câble ou tuyau selon l'une quelconque des revendications précédentes, **caractérisé en ce qu'**aux deux extrémités de l'élément de guidage (26) respectivement un élément de liaison (33a, 33b) est disposé, dans lequel les deux éléments de liaison (33a, 33b) forment des délimitations latérales pour le mouvement dirigé dans le sens axial du câble (15) lors de l'enroulement.

8. Enrouleur pour câble ou tuyau selon la revendication 7, **caractérisé en ce que** l'élément de guidage (26) et les deux éléments de liaison (33a, 33b) forment un étrier pivotant (34) réalisé en particulier d'un seul tenant en forme de U.

9. Enrouleur pour câble ou tuyau selon l'une quelconque des revendications précédentes 7 et 8, **caractérisé en ce que** les deux éléments de liaison (33a, 33b) fonctionnent en tant qu'éléments de palier et présentent sur leurs extrémités éloignées de l'élément de guidage (26) des ouvertures débouchantes s'alignant les unes sur les autres pour l'enfichage sur la section de poignée (21).

10. Enrouleur pour câble ou tuyau selon l'une quelconque des revendications précédentes, **caractérisé en ce qu'**une surface de préhension pour la main de l'utilisateur est associée à la section de poignée (21), dans lequel de préférence la surface de préhension est disposée de manière fixe au support sur la section de poignée (21) ou sur une partie de préhension (35) séparée de la section de poignée.

11. Enrouleur pour câble ou tuyau selon la revendication 10, **caractérisé en ce que** la partie de préhension (35) est formée par une douille d'enfichage enfichée sur la section de poignée (21).

12. Enrouleur pour câble ou tuyau selon l'une quelconque des revendications précédentes, **caractérisé en ce que** le dispositif de guidage (25) présente un emplacement de connecteur (29) pour un connecteur de câble (30) du câble (15), dans lequel de préférence sur l'élément de guidage (26) des trous (28) sont réalisés pour la réception des contacts (31) du connecteur de câble (30).
